# EUROPÄISCHE PATENTSCHRIFT

(11) **EP 1 175 771 B1**
(45) Veröffentlichungstag und Bekanntmachung des Hinweises auf die Patenterteilung: **16.06.2004**
(21) Anmeldenummer: 00925173.7
(22) Anmeldetag: 05.04.2000
(51) Int. Cl.: H04M 1/725, H04M 1/247, H04Q 7/22, G06F 3/033

(54) **TEXTEINGABE DURCH SELEKTION VON INFORMATIONSEINHEITEN**
TEXT INPUT BY SELECTING INFORMATION ELEMENTS
SAISIE DE TEXTE PAR SELECTION D'UNITES D'INFORMATION

(30) Priorität: 03.05.1999 EP 99108781
(43) Veröffentlichungstag der Anmeldung: 30.01.2002
(73) Patentinhaber: SIEMENS AKTIENGESELLSCHAFT, 80333 München (DE)
(72) Erfinder: HOLZ AUF DER HEIDE, Bernd, D-81549 München (DE); OBERMAIER, Anton, D-80637 München (DE)
(86) Internationale Anmeldenummer: PCT/EP2000/003044
(87) Internationale Veröffentlichungsnummer: WO 2000/067454

(56) Entgegenhaltungen:
- EP-A- 0 693 860
- EP-A- 0 751 627
- EP-A- 0 755 126
- EP-A- 0 801 512
- EP-A- 0 837 433
- EP-A- 0 860 971
- WO-A-98/54846
- DE-A- 19 624 679

## Beschreibung

Die Erfindung ein Verfahren zum Erstellen von Texten.

Die Eingabe von Texten erfolgt bisher vorzugsweise sequentiell über eine Tastatur, wobei pro Tastendruck grundlegende Informationseinheiten (beispielsweise Buchstaben, Ziffern, beziehungsweise allgemein alphanumerische Zeichen) abgerufen werden. Typische Beispiele sind die Tastatur eines Computers oder das 12er-Keypad eines Telefons. Üblicherweise gibt es hierbei mehr grundlegende Informationseinheiten als Tasten, was zur Mehrfachbelegung einer Taste mit entsprechenden Abrufmechanismen führt. So ist beispielsweise zusätzlich eine Shift-Taste zu drücken oder ein Mehrfachdruck innerhalb eines Zeitfensters auszuüben. Das Problem hierbei ist, daß je weniger Tasten zur Verfügung stehen, desto umständlicher und fehlerträchtiger wird der Aufbau beziehungsweise die Eingabe übergeordneter Informationseinheiten, wie beispielsweise eines Wortes.

Um dieses Problem zu vermeiden existieren Verfahren (beispielsweise "TEGIC T9"), die den Druck auf eine mehrfachbelegte Taste nach entsprechenden Algorithmen und Wahrscheinlichkeiten auswerten. Die Auswertung erfolgt dahingehend, welche der jeweils zugeordneten grundlegenden Informationseinheiten der Benutzer wohl eigentlich aufrufen wollte, um dadurch eine übergeordnete Informationseinheit aufzubauen. Hierbei existieren folgende Probleme:

Prinzipbedingt entstehen zunächst regelmäßig falsche beziehungsweise vom Benutzer nicht intendierte Zeichenfolgen, die den Benutzer verwirren und die Akzeptanz des Verfahrens vermindern.

Die Verfahren stellen weiter relativ hohe Anforderungen an die Hardwareausstattung (das heißt an die Prozessorleistung und an den Speicherbedarf). Existierende Lösungen sind zudem primär für die englische Sprache ausgelegt, die hinsichtlich der Grammatik und weiterer relevanter Parameter vergleichsweise einfach strukturiert ist. Die praktische Bewährung für die deutsche Sprache steht noch aus.

Aus der WO98/54846 ist ein Editierverfahren für Textnachrichten bekannt. Hierbei sind mehrere Textnachrichten vorgegeben, die zumindest teilweise verändert und ergänzt werden können.

Der Erfindung liegt die Aufgabe zugrunde, ein komfortables Schreiben von Texten auch bei Verwendung von zahlenmäßig begrenzten Tasten zu ermöglichen.

Diese Aufgabe wird erfindungsgemäß durch die im Patentanspruch 1 angegebenen Merkmale gelöst.

Das erfindungsgemäße Verfahren ermöglicht eine komfortable und schnelle Eingabe von Texten durch einen Abruf von übergeordneten Informationseinheiten, beispielsweise von Worten.

Dabei werden keine grundlegenden Informationseinheiten sequentiell per Tastatur o.ä. eingegeben, sondern es werden übergeordnete Informationseinheiten unmittelbar aus Listen ausgewählt, die nach Nutzungskontext und Nutzungswahrscheinlichkeit statisch und/oder dynamisch zusammengestellt sind. In den Listen nicht enthaltene Informationseinheiten können nach herkömmlichen Methoden ergänzt werden. Der Vorteil dieses ganzheitlichen Konzepts liegt darin, daß ein großer Teil der typischerweise im Zusammenhang mit Systemen der Informations-, Kommunikations- und Unterhaltungselektronik verwendeten Texte komfortabel, schnell und fehlerfrei erzeugt werden kann. Dies erhöht die praktische Nutzbarkeit und die Benutzer- und Marktakzeptanz derartiger Systeme.

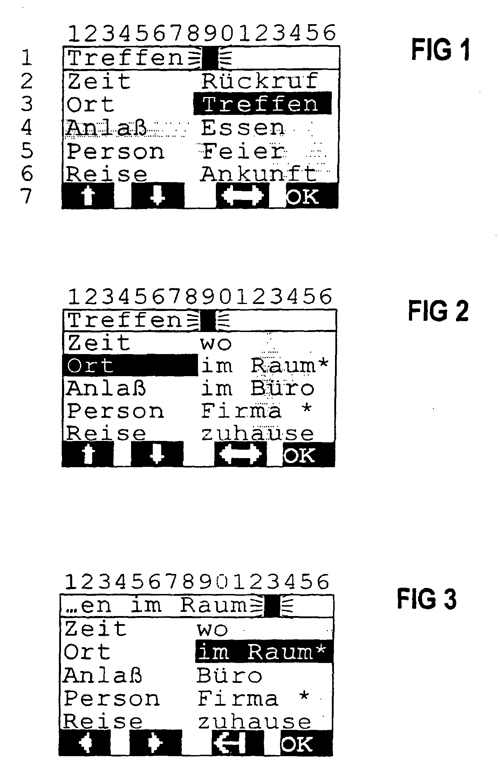

Im folgenden wird an Hand der Zeichnung ein Ablauf gezeigt, wie die Eingabe von Texten mit Hilfe von Bausteinen komfortabel und rasch erfolgen kann. Dabei zeigen die Figuren 1 bis 3 jeweils eine Liste der sequentiell angebotenen Informationseinheiten.

Der Vorteil der erfindungsgemäßen Methode FITT (Abkürzung für "Fast Item To Text") liegt im schnellen Zusammenstellen von beispielsweise kurzen Texten durch direkten Zugriff auf fertige Einzelbausteine, in einer übersichtliche Strukturierung und in einer gezielten Auswahl von Kategorien und Begriffen.

Es wird beispielsweise als Anzeigeneinheit ein farbiges Display mit sieben Zeilen zu je 16 Zeichen verwendet. In der zugehörigen Figur 1 ist infolge der Schwarzweißdarstellung nur eine Schattierung beziehungsweise eine Schrift auf schwarzem Hintergrund als Inversschrift darstellbar.

Die Zeile eins visualisiert die momentan zusammengestellte beziehungsweise editierte Zeichenfolge, wobei ein blinkender Blockcursor (Zeile 1, Position 9) die Position kennzeichnet, an der die nächsten eingegebenen Zeichen eingefügt werden. Die Zeilen zwei bis sechs zeigen Auswahlmöglichkeiten von Begriffen in der rechten Hälfte, die jeweils zu einer übergeordneten Begriffskategorie in der linken Hälfte gehören. Die Zusammengehörigkeit von Kategorie und Begriff wird im Beispiel durch eine schattierte Hinterlegung angezeigt. Die siebte Zeile stellt kontextabhängig Softkeys zur Verfügung, mit denen navigiert oder editiert werden kann. Der erste Softkey (Pfeil nach oben) ermöglicht die Funktion "nach-oben-Navigieren", der zweite Softkey (Pfeil nach unten) ermöglicht die Funktion "nach-unten-Navigieren, der dritte Softkey (Doppelpfeil in horizontaler Richtung) ermöglicht den Wechsel zwischen dem rechten und dem linken Bereich beziehungsweise umgekehrt. Der vierte Softkey (OK) bewirkt die Übernahme einer Informationseinheit in den Schreibtext in Zeile eins.

Die Figur 1 repräsentiert folgenden Zustand:
Aufruf der Texteingabe, Anwahl der Kategorie "Anlaß" (im linken Bereich) mit dem ersten und dem zweiten Softkey, Wechsel zum rechten Bereich mit den Begriffen dieser Kategorie mit dem dritten Softkey, Auswahl des Begriffs "Treffen", und Übernahme an die Position des Blockcursors mit dem vierten Softkey "OK". Ein Leerzeichen wird automatisch angehängt und der Schreibcursor weiterbewegt. Der aktuell ausgewählte Begriff wird im Auswahlfenster(rechter Bereich Zeile zwei bis sechs) invers dargestellt.

Durch Wechsel des Bereichs mit dem dritten Softkey und nachoben-Navigieren mit dem ersten Softkey wird der Inhalt des rechten Auswahlfensters ausgetauscht, und man gelangt zur Begriffsmenge, die in Figur 2 dargestellt ist.

Die selektierte Kategorie ist nun "Ort"; durch Betätigen des dritten Softkeys und Bestätigung mit dem vierten Softkey "OK" gelangt man zu Figur 3.

In Figur 3 wurde im Rahmen einer Weiterbildung der Erfindung ein Begriff gewählt, der zum einen die bisherigen Eingaben nach links aus dem Editorfenster in Zeile 1 schiebt, angedeutet durch die Pünktchen an der ersten Stelle. Zum anderen stellt er eine Möglichkeit zur manuellen Ergänzung bereit, erkennbar an dem "*" im Begriff. Es wird automatisch in den Editormodus gewechselt, in dem Einzelzeichen eingegeben werden können.

Mit "OK" wird der Editormodus verlassen. Es stehen nun mehrere Operationen zur Verfügung:
Abspeichern des anstelle des "*" eingegebenen Begriffs, z.B. in der Kategorie "Ort"
Rückkehr zum vorigen FITT-"Begriff-Einfüge-Modus".

Der Abschluß der Texteingabe und sofortige Start der Übertragung der Nachricht kann dann direkt durch Drücken der Abheben-(Sende)-Tasten erfolgen.

Bei einer Ausgestaltung der Erfindung sind weitere Funktionen möglich:

Importieren von Namen aus einem vorhandenen elektronischen Telefonbuch.

Individualisieren der Kategorien und Begriffe im rechten beziehungsweise linken Bereich der Anzeigefenster in den Figuren durch Hinzufügen/Löschen und Verändern.

Einfacher Abschluß der Texteingabe und Weiterverarbeitung der Nachricht direkt aus dem "Begriff-Einfüge-Modus".

Für die verschiedenen Anwendungszwecke können unterschiedliche Sätze von Kategorien zur Verfügung gestellt werden. Eine Begriffsmenge für den Bereich "Business" könnte z.B. folgendes Aussehen haben:
a) Kategorie "Zeit":
   wann; jetzt; später; früher; heute; morgen; am **.**.**; um **:** Uhr; ** Minuten; ** Stunden; Beginn; Ende; vor; nach.
b) Kategorie "Aufforderung":
   bitte; informieren; anrufen; melden; kommen; * mitbringen.
c) Kategorie "Zusatzinfo":
   genau; ungefähr; mindestens; höchstens; dringend; mit; und; oder; aber; gut; schlecht; bezüglich; entsprechend.
d) Kategorie "Ort":
   wo; bei; vor; links; rechts; in *; im *; im Raum *; im Büro; Firma *; zuhause.
e) Kategorie "Reise":
   womit; Auto; Taxi; Bahn; Flugzeug; kommen; gehen.
f) Kategorie "Personen":
   wer; Kunde *; ich; Dich; sie, er; Chef; Sekretariat.
g) Kategorie "Anlaß":
   was; Rückruf; Besprechung; Treffen; Essen; Feier; Ankunft; Abreise, Termin, Vereinbarung.

Hier ein Beispieltexte für eine Kurznachricht (SMS) mit der Begriffsmenge für "Business"
(kursiv dargestellt ist die herkömmliche, freie Texteingabe) :

| | |
|---|---|
| Gewünschte Nachricht | SMS-Umsetzung mit FITT |
| *Wo genau ist die Besprechung* | Wo genau Besprechung |
| *Ich komme 10 Minuten später* | Ankunft *10* Minuten später |
| *Besprechung am 24.9. um 10 Uhr im Hofbräuhaus* | Besprechung am *24.09.98* um *10:00* Uhr im *Hofbräuhaus* |
| *Treffen mit Matthias heute im Raum 424*. | Treffen mit *Matthias* heute im Raum *424* |
| *Ich fahre jetzt los, bitte Frau Meier informieren.* | Abreise jetzt, bitte *Fr. Meier* informieren |

An Stelle der beschriebenen zwei hierarchisch aufeinander bezogenen Auswahlmengen könnten auch drei oder noch mehr Auswahlmengen zur Erstellung der Texte vorgesehen sein. Hierbei wäre ein entsprechend große Darstellungsmöglichkeit auf dem Display hilfreich.

## Patentansprüche

1. Verfahren zum Erstellen von Texten
bei dem eine erste Informationseinheit aus einer ersten Auswahlmenge auswählbar ist,
**dadurch gekennzeichnet, dass**
jeder ersten Informationseinheit mindestens eine zweite Informationseinheit aus einer zweiten Auswahlmenge zugeordnet ist, und
bei dem eine zweite Informationseinheit auswählbar ist, wobei die Aufeinanderfolge der ausgewählten zweiten Informationseinheiten den Text ergibt.

2. Verfahren nach Anspruch 1,
**dadurch gekennzeichnet, dass**
die Zuordnung von zweiten Informationseinheiten der zweiten Auswahlmenge zu einer ersten Informationseinheit der ersten Auswahlmenge auf einer Anzeigeeinrichtung grafisch dargestellt ist.

## Claims

1. Text editing method in which a first information element can be selected from a first set of selectable terms, **characterized in that** each first information element is allocated at least one second information element from a second set of selectable terms, and in which a second information element may be selected so that the sequence of selected second information elements forms the text.

2. Method according to Claim 1, **characterized in that** the allocation of second information elements from the second set of selectable terms to a first information element from the first set of selectable terms is represented by graphical means on a display device.

## Revendications

1. Procédé pour créer des textes, dans lequel une première unité d'informations est sélectionnable dans un premier ensemble de sélection, **caractérisé en ce qu'**au moins une deuxième unité d'informations d'un deuxième ensemble de sélection est associée à chaque première unité d'informations et dans lequel une deuxième unité d'informations est sélectionnable, le texte résultant de la succession des deuxièmes unités d'informations sélectionnées.

2. Procédé selon la revendication 1, **caractérisé en ce que** l'association de deuxièmes unités d'informations du deuxième ensemble de sélection à une première unité d'informations du premier ensemble de sélection est représentée graphiquement sur un dispositif d'affichage.
